(19) Europäisches Patentamt
European Patent Office
Office européen des brevets

(11) EP 2 974 801 A1

(12) **EUROPEAN PATENT APPLICATION**
published in accordance with Art. 153(4) EPC

(43) Date of publication:
**20.01.2016 Bulletin 2016/03**

(21) Application number: **14764591.5**

(22) Date of filing: **12.03.2014**

(51) Int Cl.:
***B05D 7/24*** (2006.01) ***B05D 3/02*** (2006.01)
***C08G 73/10*** (2006.01) ***C08K 5/17*** (2006.01)
***C08K 5/3445*** (2006.01) ***C08L 79/08*** (2006.01)
***C09D 5/25*** (2006.01) ***C09D 179/08*** (2006.01)

(86) International application number:
**PCT/JP2014/056504**

(87) International publication number:
**WO 2014/142173 (18.09.2014 Gazette 2014/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.03.2013 JP 2013050566**

(71) Applicant: **UBE Industries, Ltd.**
**Yamaguchi 755-8633 (JP)**

(72) Inventors:
- **TERADA, Takeshi**
**Ube-shi**
**Yamaguchi 755-8633 (JP)**
- **NAGAO, Keigo**
**Ube-shi**
**Yamaguchi 755-8633 (JP)**
- **NAKAYAMA, Takeshige**
**Ube-shi**
**Yamaguchi 755-8633 (JP)**
- **TAKASAWA, Ryoichi**
**Ube-shi**
**Yamaguchi 755-8633 (JP)**

(74) Representative: **Cabinet Plasseraud**
**52, rue de la Victoire**
**75440 Paris Cedex 09 (FR)**

# (54) METHOD FOR PRODUCING INSULATING COATING LAYER

(57) The present invention relates to a method for producing a polyimide insulating coating layer, the method comprising a step of:
applying a polyimide precursor composition to a substrate and baking the composition on the substrate,
wherein the polyimide precursor composition comprises a polyamic acid and a basic compound selected from the group consisting of imidazoles and amine compounds, and
wherein in the baking step,
the length of time for which the polyimide precursor composition is heated is 10 seconds to 180 seconds;
the average temperature increasing rate from 100°C to 280°C is 5°C/s or more; and
the highest heating temperature is 300°C to 500°C.

EP 2 974 801 A1

## Description

### Technical Field

The present invention relates to a method for producing an insulating coating layer, by which a polyimide insulating coating layer having excellent heat resistance may be efficiently produced in a short time.

### Background Art

Polyimide resin is known as a resin having very good heat resistance, and is widely used in various fields. Polyimide resin is used as an insulating layer of an electric wire, which requires high properties, for example, because it has low dielectric constant and excellent mechanical properties in addition to high heat resistance. Patent Literature 1 discloses an insulation-coated electric wire comprising an insulating layer on a core, wherein the insulating layer is formed by imidizing a polyamic acid obtained by the reaction of biphenyltetracarboxylic dianhydride and 4,4'-diaminodiphenyl ether, and explains that the polyimide insulation-coated electric wire has excellent resistance to thermal degradation.

Patent Literature 2 discloses an insulating polyimide precursor varnish comprising a basic substance such as an amine compound in an amount of 0.1 to 60 wt% relative to the amount of the polyimide precursor, specifically, polyamic acid alkyl ester. Patent Literature 2 explains that the basic substance has the effect of suppressing the reaction of the polyimide precursor varnish and copper, and therefore the polyimide obtained by thermally imidizing the polyimide precursor varnish on copper has a very low copper atom content, with the consequence that the polyimide has reduced degradation in properties, and the long-term reliability of an electronic device such as LSI comprising a copper / polyimide-thin-film multi-layer wiring or a copper / polyimide wiring in which the polyimide is used for an insulating layer may be improved.

Patent Literature 3 discloses an aqueous polyimide precursor solution composition, wherein a polyamic acid obtained by the reaction of a tetracarboxylic dianhydride and a diamine having a solubility in water at 25°C of 0.1 g/L or more, e.g. polyamic acid obtained by the reaction of 3,3',4,4'-biphenyltetracarboxylic dianhydride and p-phenylenediamine or 4,4'-diaminodiphenyl ether, is dissolved in water solvent, or an aqueous solvent which is a mixture of water and an organic solvent and has a water content of 50 wt% or more, together with an imidazole having two or more alkyl groups as substituents, e.g. 1,2-dimethyl imidazole.

### Citation List

### Patent Literature

Patent Literature 1: JP-A-S61-273806
Patent Literature 2: JP-A-H08-27418
Patent Literature 3: WO2012/008543

### Summary of Invention

### Technical Problem

Some polyimide may become crystalline, which depends on a combination of the tetracarboxylic acid component and the diamine component, with the consequence that the conditions for imidization of a polyamic acid, which is a polyimide precursor, may be limited thereby. When 3,3',4,4'-biphenyltetracarboxylic dianhydride is used as the tetracarboxylic acid component, for example, a crystalline polyimide resin is apt to be formed, and a partial crystallization readily occurs under certain conditions for imidization, especially in the case where the imidization is performed by heat treatment in a short time with the temperature rapidly increasing. Accordingly, sometimes the temperature increasing rate may not be increased to increase productivity when a polyamic acid in which 3,3',4,4'-biphenyltetracarboxylic dianhydride is used as the tetracarboxylic acid component is imidized to form a polyimide layer.

An object of the present invention is to provide a method for producing a polyimide insulating coating layer, by which a polyimide insulating coating layer is formed by imidizing a polyamic acid in which 3,3',4,4'-biphenyltetracarboxylic dianhydride is used as the tetracarboxylic acid component, wherein the polyimide insulating coating layer may be formed without defects even when the temperature is rapidly increased. In other words, an object of the present invention is to provide an industrially advantageous method by which an insulating coating layer of polyimide resin having excellent

heat resistance and mechanical properties may be formed in a short time without crystallization being occured.

Solution to Problem

The present invention relates to the following items.

[1] A method for producing a polyimide insulating coating layer, the method comprising a step of:

applying a polyimide precursor composition to a substrate and baking the composition on the substrate,

wherein the polyimide precursor composition comprises
a polyamic acid consisting of a repeating unit represented by the following chemical formula (1):

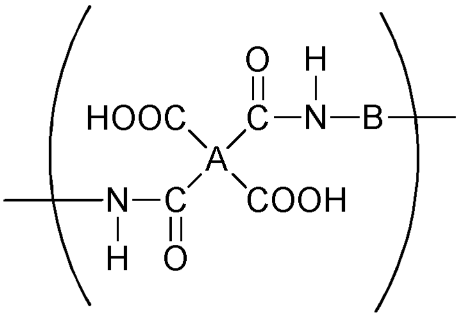

(1)

in the chemical formula (1),
A is a tetravalent organic group and 50 mol% to 100 mol% of A is a tetravalent group represented by the following chemical formula (2):

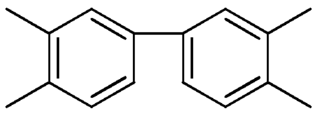

(2)
;

and
B is a divalent organic group, and
a basic compound selected from the group consisting of imidazoles and amine compounds, and
wherein in the baking step,
the length of time for which the polyimide precursor composition is heated is 10 seconds to 180 seconds;
the average temperature increasing rate from 100°C to 280°C is 5°C/s or more; and
the highest heating temperature is 300°C to 500°C.

[2] The method for producing an insulating coating layer as described in [1], wherein the polyimide precursor composition comprises an imidazole having two or more alkyl groups as substituents as the basic compound.

[3] The method for producing an insulating coating layer as described in [2], wherein the imidazole is an imidazole selected from the group consisting of 1,2-dimethylimidazole, 2-ethyl-4-methylimidazole, 4-ethyl-2-methylimidazole, and 1-methyl-4-ethylimidazole.

[4] The method for producing an insulating coating layer as described in any one of [1] to [3], wherein the polyimide precursor composition comprises an aliphatic amine or a cyclic amine as the basic compound.

[5] The method for producing an insulating coating layer as described in [4], wherein the amine compound is a compound selected from the group consisting of trimethylamine, diethylamine, dimethylethylamine, triethylamine, N-propylethylamine, N-butylethylamine, N,N-dimethylcyclohexylamine, and 1,4-diazabicyclo[2,2,2]octane.

Advantageous Effects of Invention

According to the present invention, there may be provided an industrially advantageous method by which an insulating coating layer of polyimide resin having excellent heat resistance and mechanical properties may be formed in a short time without crystallization being occured. The method of the present invention for producing a polyimide insulating coating layer may be particularly suitably applied to the production of electric insulated wires, and an electric insulated wire having excellent heat resistance and high reliability in which the insulating coating layer has no defect may be efficiently produced.

Description of Embodiments

The present invention relates to a method for producing a polyimide insulating coating layer, which comprises applying a polyimide precursor composition to a substrate, and then increasing the temperature in a short time and baking the composition on the substrate at a high temperature, and the method is characterized in that the polyimide precursor composition comprises a specific polyamic acid consisting of a repeating unit represented by the chemical formula (1) and a specific basic compound. The step of "increasing the temperature in a short time and baking the composition on the substrate at a high temperature" as used herein is a step, for example, in which the length of time for which the polyimide precursor composition is heated is 10 seconds to 180 seconds; and the temperature is increased on the condition that the average temperature increasing rate from 100°C to 280°C is 5°C/s or more; and the highest heating temperature is 300°C to 500°C.

The polyamic acid used in the present invention consists of a repeating unit represented by the chemical formula (1) and may be obtained by reacting a tetracarboxylic dianhydride and a diamine in a solvent, for example, in water or an organic solvent, or in a mixed solvent of water and an organic solvent.

In the chemical formula (1), the "A" is a tetravalent organic group and the "A" is a tetravalent group derived from the tetracarboxylic dianhydride (tetravalent unit of a tetracarboxylic acid, from which carboxyl groups have been removed). Additionally, 50 mol% to 100 mol% of "A" is a tetravalent group represented by the chemical formula (2), which is a tetravalent unit of 3,3',4,4'-biphenyltetracarboxylic acid, from which carboxyl groups have been removed). In the chemical formula (1), the "B" is a divalent organic group and the "B" is a divalent group derived from the diamine compound (divalent unit of a diamine compound, from which amino groups have been removed).

In the tetracarboxylic dianhydride used in the present invention, the main component, i.e. 50 mol% to 100 mol%, more preferably 70 mol% to 100 mol% thereof is 3,3',4,4'-biphenyltetracarboxylic dianhydride. In the present invention, 3,3',4,4'-biphenyltetracarboxylic dianhydride is preferably used as the main component in view of heat resistance and mechanical properties. In the case where 3,3',4,4'-biphenyltetracarboxylic dianhydride is used as the tetracarboxylic acid component, a partial crystallization readily occurs when the imidization is performed by heat treatment in a short time with the temperature rapidly increasing, as described above. According to the present invention, however, a polyimide layer may be formed without crystallization being occurred even when the temperature is rapidly increased.

According to the present invention, a tetracarboxylic acid component (tetracarboxylic dianhydride) other than 3,3',4,4'-biphenyltetracarboxylic dianhydride may be used in an amount of less than 50 mol%. In the present invention, the tetracarboxylic dianhydride which may be used in combination with 3,3',4,4'-biphenyltetracarboxylic dianhydride may be preferably, but not limited to, an aromatic tetracarboxylic dianhydride or an alicyclic tetracarboxylic dianhydride in view of the properties of the polyimide obtained. Preferred examples thereof include 2,3,3',4'-biphenyltetracarboxylic dianhydride, 2,2',3,3'-biphenyltetracarboxylic dianhydride, pyromellitic dianhydride, 3,3',4,4'-benzophenone tetracarboxylic dianhydride, oxydiphthalic dianhydride, diphenylsulfone tetracarboxylic dianhydride, p-terphenyl tetracarboxylic dianhydride, m-terphenyl tetracarboxylic dianhydride, cyclobutane-1,2,3,4-tetracarboxylic dianhydride, and 1,2,4,5-cyclohexane tetracarboxylic dianhydride. Among them, if a tetracarboxylic acid component other than 3,3',4,4'-biphenyltetracarboxylic dianhydride is used, any one or more of 4,4'-oxydiphthalic dianhydride, 2,3,3',4'-biphenyltetracarboxylic dianhydride, or pyromellitic dianhydride may be particularly preferably used in view of the properties of the polyimide obtained. The tetracarboxylic dianhydride as described above may not be a single component, and may be a mixture of two or more types thereof.

Preferred examples of the diamine which may be used in the present invention include, but not limited to, aromatic diamines such as 4,4'-diaminodiphenyl ether, 4,4'-diaminodiphenyl methane, 3,3'-diaminodiphenyl methane, 3,3'-dichlorobenzidine, 4,4'-diaminodiphenyl sulfide, 3,3'-diaminodiphenyl sulfone, 1,5-diaminonaphthalene, m-phenylenediamine, p-phenylenediamine, 3,3'-dimethyl-4,4'-biphenyldiamine, benzidine, 3,3'-dimethylbenzidine, 3,3'-dimethoxybenzidine, 4,4'-diaminodiphenyl sulfone, 4,4'-diaminodiphenyl propane, 2,4-diaminotoluene, bis(4-amino-3-carboxyphenyl)methane, 1,3-bis(4-aminophenoxy)benzene, 1,4-bis(4-aminophenoxy)benzene, 2,2-bis[4-(4-aminophenoxy)phenyl]propane, bis[4-(4-aminophenoxy)phenyl]sulfone, 2,4-bis(β-amino-tert-butyl)toluene, bis(p-β-amino-tert-butylphenyl)ether, bis(p-β-methyl-6-aminophenyl)benzene, bis-p-(1,1-dimethyl-5-amino-pentyl)benzene, 1-isopropyl-2,4-m-phenylenediamine, m-xylylenediamine, p-xylylenediamine, and 2,2-bis[4-(4-aminophenoxy)phenyl]propane; diamines containing an alicyclic structure such as di(p-aminocyclohexyl)methane, and 1,4-diaminocyclohexane; and aliphatic diamines such as hexamethylenediamine, heptamethylenediamine, octamethylenediamine, nonamethylenediamine, decamethylenediamine, diaminopropyltetramethylene, 3-methylheptamethylenediamine, 4,4-dimethylheptamethylenediamine, 2,11-diaminododecane, 1,2-bis-3-aminopropoxyethane, 2,2-dimethylpropylenediamine, 3-methoxyhexamethylenediamine, 2,5-dimethylhexamethylenediamine, 2,5-dimethylheptamethylenediamine, 3-methylheptamethylenediamine, 5-methylnonamethylenediamine, 2,17-diaminoeicosadecane, 1,10-diamino-1,10-dimethyldecane, and 1,12-diaminooctadecane. The diamine as described above may not be a single component, and may be a mixture of two or more types thereof.

Among those as described above, 4,4'-diaminodiphenyl ether, 4,4'-diaminodiphenyl methane, m-phenylenediamine, p-phenylenediamine, 2,4-diaminotoluene, 1,3-bis(4-aminophenoxy)benzene, 1,4-bis(4-aminophenoxy)benzene, 2,2-bis[4-(4-aminophenoxy)phenyl]propane, m-xylylenediamine, p-xylylenediamine, and 2,2-bis[4-(4-aminophenoxy)phenyl]propane are more preferred as the aromatic diamine; and hexamethylenediamine, heptamethylenediamine, octamethylenediamine, nonamethylenediamine, decamethylenediamine, diaminopropyltetramethylene, 3-methylheptamethylenediamine, 2,11-diaminododecane, and 1,12-diaminooctadecane are more preferred as the aliphatic diamine. Among them, any one or more of p-phenylenediamine, or 4,4'-diaminodiphenyl ether may be particularly preferably used in view of the properties of the polyimide obtained.

The polyamic acid used in the present invention may be particularly preferably a polyamic acid consisting of a repeating unit represented by the following chemical formula (1'):

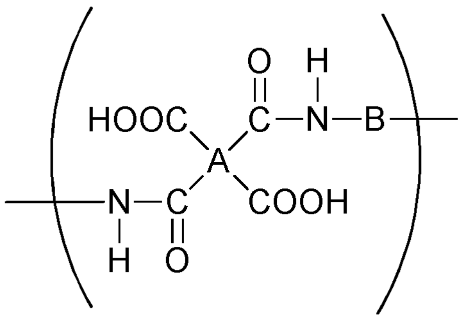

(1')

in the chemical formula (1'),

A is a tetravalent organic group and 50 mol% to 100 mol%, preferably 70 mol% to 100 mol% of A is a tetravalent group (unit) represented by the following chemical formula (2):

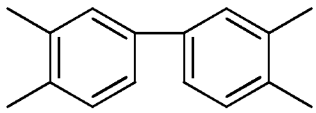

(2)

;

and

B is a divalent group (unit) represented by the following chemical formula (3) and/or a divalent group (unit) represented by the following chemical formula (4):

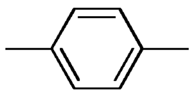

(3)

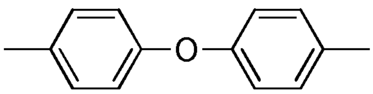

(4)

The basic compound used in the present invention is the one which forms a salt with a carboxyl group of a polyamic acid, thereby increasing the solubility of the polyamic acid in the solvent, and specifically, a basic compound selected from the group consisting of imidazoles (imidazole compounds) and amine compounds. The basic compound (imidazoles, amine compounds) used may be a single compound, or may be a mixture of two or more types thereof.

Preferred examples of the imidazoles include, but not limited to, a compound represented by the following chemical formula (5):

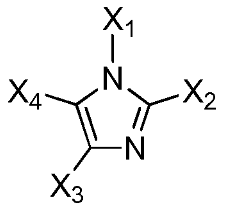

(5)

in the chemical formula (5),
$X_1$ to $X_4$ each independently is a hydrogen atom, or an alkyl group containing 1 to 5 carbon atoms.

The imidazole used in the present invention may preferably have a solubility in water at 25°C of 0.1 g/L or more, particularly preferably 1 g/L or more.

As for the imidazole of the chemical formula (5), an imidazole in which $X_1$ to $X_4$ each independently is a hydrogen atom, or an alkyl group containing 1 to 5 carbon atoms, and at least two of $X_1$ to $X_4$ are alkyl groups containing 1 to 5 carbon atoms, i.e. an imidazole having two or more alkyl groups as substituents is more preferred.

Preferred examples of the imidazole having two or more alkyl groups as substituents include 1,2-dimethylimidazole (solubility in water at 25°C: 239 g/L; the same shall apply hereinafter), 2-ethyl-4-methylimidazole (1000 g/L), 4-ethyl-2-methylimidazole (1000 g/L), and 1-methyl-4-ethylimidazole (54 g/L). An imidazole having two or more alkyl groups as substituents has high solubility in water, and therefore, when such an imidazole is used, a polyimide precursor composition in which water, or a mixed solvent of water and an organic solvent is used as the solvent may be easily produced. In the case of a polyimide precursor composition in which the solvent is an organic solvent, the imidazoles as described above usually may be suitably used.

The "solubility in water at 25°C" means the maximum amount (g) of the substance soluble in 1 L (liter) of water at 25°C. This value may be easily searched with SciFinder®, which is known as a search service based on the data bases such as Chemical Abstracts. Among the various values of solubility under various conditions, the values at pH 7, which are calculated by Advanced Chemistry Development (ACD/Labs) Software V11.02 (Copyright 1994-2011 ACD/Labs), are used herein.

The characteristics of the imidazole are that the imidazole forms a salt with a carboxyl group of a polyamic acid, thereby increasing the solubility of the polyamic acid in the solvent, and also that the imidazole exhibits a very high catalytic activity during the imidization (dehydration/ring closure) of the polyamic acid to form a polyimide.

Preferred examples of the amine compound include compounds having at least one primary to tertiary amino group in the molecule (hereinafter, referred to as "primary to tertiary amine"). In the present application, the "primary to tertiary amino group" means a structure in which all three bonds to the central nitrogen atom are single bonds. The amine compound, however, may be a cyclic amine having a nitrogen atom contained in the ring such as piperazine, piperidine, pyrrolidine, and diazabicyclooctane, on the condition that all three bonds to the central nitrogen atom are single bonds. The amine compound may have another nitrogen atom in the molecule, on the condition that it has one primary to tertiary amino group as described above, and the other nitrogen atom may be in a primary to tertiary amino group, or may constitute an imino group having a double bond. In the case where the amine compound has another nitrogen atom in the molecule, it is preferred that the other nitrogen atom is not adjacent to the nitrogen atom in the amino group.

The primary to tertiary amine may be preferably an aliphatic amine, and a hydrocarbon group in the aliphatic amine may be chain (branched, or linear chain) (that is, primary to tertiary amine in which a branched or linear hydrocarbon group is bound to the nitrogen atom), or may be cyclic (that is, primary to tertiary amine in which a cyclic hydrocarbon group or a hydrocarbon group containing an aliphatic ring is bound to the nitrogen atom). The primary to tertiary amine may also be a cyclic amine having a nitrogen atom contained in the ring. In the case where the amine is a cyclic amine, it may be preferably a saturated ring. In the case where the amine is not a cyclic amine, it may have an unsaturated group such as an imino group, together with an amino group. In addition, the hydrocarbon moiety in the aliphatic amine (including cyclic amine having a nitrogen atom contained in the ring) may be substituted by -OH, amino group, -COOH, or the like. Additionally, $-CH_2-$ in the aliphatic group may be substituted by -O-, and in this case, it is more preferred that the oxygen atom (O) is not adjacent to the nitrogen atom in the amino group.

Examples of the amine compound which may be used in the present invention include piperazines, guanidine and guanidine salts, alkylamines, amino group-containing alcohols (OH-substituted alkylamines), carboxyl-substituted alkylamines, piperidines, pyrrolidines, and diazabicyclooctanes.

As for the piperazines, unsubstituted piperazine, or piperazine substituted by an alkyl group (preferably an alkyl group containing 1 to 6 carbon atoms, more preferably containing 1 to 3 carbon atoms) may be preferred, and the alkyl group herein may further have an amino group. The position substituted by the alkyl group may be any position in the piperazine ring, and may be on the nitrogen atom, or may be on the carbon atom.

Specific examples thereof include piperazine, 1-methylpiperazine, 1-ethylpiperazine, 1-propylpiperazine, 1,4-dimethylpiperazine, 1,4-diethylpiperazine, 1,4-dipropylpiperazine, 2-methylpiperazine, 2-ethylpiperazine, 3-propylpiperazine, 2,6-dimethylpiperazine, 2,6-diethylpiperazine, 2,6-dipropylpiperazine, 2,5-dimethylpiperazine, 2,5-diethylpiperazine, and 2,5-dipropylpiperazine. In addition, piperazines substituted by an aminoalkyl group such as 1-aminoethylpiperazine may be also preferred.

Examples of the guanidine and guanidine salts include a salt of guanidine and a weak acid, in addition to guanidine, and include guanidine carbonate, guanidine oxalate, and guanidine acetate.

As for the alkylamines, a primary to tertiary amine having a branched or linear alkyl group containing 1 to 6 carbon atoms, particularly containing 1 to 4 carbon atoms, or an alicyclic alkyl group containing 3 to 6 carbon atoms, particularly containing 6 carbon atoms, wherein the present alkyl groups are independent of each other, may be preferred, and a primary to tertiary amine having alkyl group(s) such that the total number of carbon atoms in the molecule is 9 or less (that is, the total number of carbon atoms of 1 to 3 alkyl groups in the molecule is 9 or less) may be more preferred. Specific examples thereof include trimethylamine, diethylamine, dimethylethylamine, triethylamine, N-propylethylamine, N-butylethylamine, and N,N-dimethylcyclohexylamine.

In addition, the alkyl group may be substituted by an amino group, and in this case, the alkylamine contains two or more primary to tertiary amino group therein. Examples of this type of alkylamine include di- or tri-amines such as ethylenediamine, and diethylenediamine triamine.

Examples of the amino group-containing alcohol (OH-substituted alkylamine) include a compound in which the alkyl group is substituted by a hydroxyl group (-OH) in the alkylamine as described above. Specific examples thereof include N,N-dimethylethanolamine, N,N-diethylethanolamine, N,N-dibutylethanolamine, and N-methyldiethanolamine.

Examples of the carboxyl-substituted alkylamine include a compound in which the alkyl group is substituted by a carboxyl group (-COOH) in the alkylamine as described above. Specific examples thereof include various amino acids.

As for the piperidines, unsubstituted piperidine, or piperidine substituted by an alkyl group (preferably an alkyl group containing 1 to 6 carbon atoms, more preferably containing 1 to 3 carbon atoms) may be preferred, and the alkyl group herein may further have an amino group. The position substituted by the alkyl group may be any position in the piperidine ring, and may be on the nitrogen atom, or may be on the carbon atom.

As for the pyrrolidines, unsubstituted pyrrolidine, or pyrrolidine substituted by an alkyl group (preferably an alkyl group containing 1 to 6 carbon atoms, more preferably containing 1 to 3 carbon atoms) may be preferred, and the alkyl group herein may further have an amino group. The position substituted by the alkyl group may be any position in the pyrrolidine ring, and may be on the nitrogen atom, or may be on the carbon atom.

As for the diazabicyclooctanes, unsubstituted diazabicyclooctane, or diazabicyclooctane substituted by an alkyl group (preferably an alkyl group containing 1 to 6 carbon atoms, more preferably containing 1 to 3 carbon atoms) may be preferred, and the alkyl group herein may further have an amino group. The position substituted by the alkyl group may be any position in the diazabicyclooctane ring, and may be on the nitrogen atom, or may be on the carbon atom. Specific examples thereof include 1,4-diazabicyclo [2,2,2] octane.

The polyamic acid used in the present invention may be obtained in the form of a polyamic acid solution by reacting substantially equimolar amounts of a tetracarboxylic dianhydride and a diamine in a solvent at a relatively low temperature of 100°C or lower, preferably 80°C or lower so as to suppress the imidization reaction.

The reaction temperature may be generally, but not limited to, from 25°C to 100°C, preferably from 40°C to 80°C, more preferably from 50°C to 80°C. The reaction time may be generally, but not limited to, from about 0.1 hours to about 24 hours, preferably from about 2 hours to about 12 hours. When the reaction temperature and the reaction time are set within the ranges as described above, a solution of a polyamic acid having a high molecular weight may be easily produced with good production efficiency.

Additionally, the reaction usually may be preferably performed in an inert gas atmosphere, preferably in a nitrogen gas atmosphere, although the reaction may be performed in an air atmosphere.

The "substantially equimolar amounts of a tetracarboxylic dianhydride and a diamine" specifically means that the molar ratio of them [tetracarboxylic dianhydride / diamine] is from about 0.90 to about 1.10, preferably from about 0.95 to about 1.05.

The solvent used in the present invention may be any solvent, on the condition that the polyamic acid can be formed by the polymerization therein, and may be water solvent or an organic solvent. The solvent may be a mixture of two or more types of solvents, and a mixed solvent of two or more types of organic solvents, or a mixed solvent of water and one or more types of organic solvents may be also suitably used.

Examples of the organic solvent which may be used in the present invention include, but not limited to, N,N-dimethylformamide, N,N-dimethylacetamide, N,N-diethylacetamide, N-methyl-2-pyrrolidone, N-ethyl-2-pyrrolidone, 1,3-dimethyl-2-imidazolidinone, N-methylcaprolactam, hexamethylphosphoric triamide, 1,2-dimethoxyethane, bis(2-methoxyethyl)ether, 1,2-bis(2-methoxyethoxy)ethane, tetrahydrofuran, bis[2-(2-methoxyethoxy)ethyl]ether, 1,4-dioxane, dimethyl sulfoxide, dimethyl sulfone, diphenyl ether, sulfolane, diphenyl sulfone, tetramethylurea, anisole, m-cresol, phenol, and $\gamma$-butyrolactone.

The solvent used for the reaction may be a solvent contained in the polyimide precursor composition of the

present invention.

As for the polyamic acid used in the present invention, the inherent (logarithmic) viscosity, which is measured at a temperature of 30°C and a concentration of 0.5 g/100 mL, may be preferably, but not limited to, 0.2 or more, preferably 0.4 or more, particularly preferably 0.6 or more. When the inherent viscosity is lower than the range as described above, the polyamic acid has a low molecular weight, and therefore it may be difficult to provide a polyimide having high properties.

The polyimide precursor composition used in the present invention is a composition in which a polyamic acid and a basic compound (imidazole, amine compound) are homogeneously mixed in a solvent. The polyimide precursor composition of the present invention may be prepared by adding a basic compound to a polyamic acid solution, which is obtained by reacting a tetracarboxylic dianhydride and a diamine in a solvent, and then mixing homogeneously the resulting mixture. Alternatively, the polyimide precursor composition of the present invention, which comprises a basic compound and a polyamic acid, may be prepared by reacting a tetracarboxylic dianhydride and a diamine in the presence of the basic compound in a solvent. As for the addition of the basic compound, the basic compound may be added to the system at the time of the production of the polyamic acid, or after the time of the production of the polyamic acid, and the basic compound may be added to the system at any time before the time of the production of the insulating coating layer.

When an organic solvent is used, the amount of the basic compound used may be preferably 0.1 equivalents or more, preferably 0.2 equivalents or more, particularly preferably 0.25 equivalents or more relative to the number of moles of the carboxyl group of the polyamic acid. In other words, in view of the solubility of the polyamic acid, the basic compound may be preferably used in an amount of 0.2 equivalents or more, preferably 0.4 equivalents or more, particularly preferably 0.5 equivalents or more relative to the tetracarboxylic dianhydride.

Meanwhile, when water solvent or a mixed solvent of water and an organic solvent is used, the amount of the basic compound used may be preferably 0.8 equivalents or more, preferably 1.0 equivalent or more, particularly preferably 1.2 equivalents or more relative to the number of moles of the carboxyl group of the polyamic acid. In other words, in view of the solubility of the polyamic acid, the basic compound may be preferably used in an amount of 1.6 equivalents or more, preferably 2.0 equivalents or more, particularly preferably 2.4 equivalents or more relative to the tetracarboxylic dianhydride.

The upper limit of the amount of the basic compound used may usually be preferably, but not limited to, less than 50 parts by weight, preferably less than 30 parts by weight, more preferably less than 20 parts by weight both when an organic solvent is used and when water solvent or a mixed solvent of water and an organic solvent is used. When the amount of the basic compound used is too great, it will be uneconomical, and the storage stability of the polyimide precursor composition may be reduced.

As for the polyimide precursor composition used in the present invention, the solid content based on the polyamic acid may be preferably, but not limited to, from 5 wt% to 45 wt%, more preferably from 5 wt% to 40 wt%, further preferably from more than 5 wt% to 30 wt%, relative to the total amount of the polyamic acid and the solvent. When the solid content is lower than 5 wt%, the handling in use may be reduced. When the solid content is higher than 45 wt%, the solution may lose the fluidity.

Additionally, in view of the handling, the solution viscosity at 30°C of the polyimide precursor composition used in the present invention may be preferably, but not limited to, 1000 Pa·sec or lower, more preferably from 0.5 Pa·sec to 500 Pa·sec, further preferably from 1 Pa·sec to 300 Pa·sec, particularly preferably from 2 Pa·sec to 200 Pa·sec.

The polyimide precursor composition used in the present invention may comprise other additive components, as necessary, in addition to the polyamic acid, the basic compound (imidazole, amine compound) and the solvent.

The polyimide precursor composition is converted into polyimide by being subjected to heat treatment to remove a solvent and effect imidization (dehydration/ring closure). With the use of the polyimide precursor composition of the present invention as described above, it becomes possible to adopt the step of increasing the temperature in a short time and baking the composition at a high temperature for the formation of a polyimide insulating coating layer.

The crystallization in the imidization process will be described hereinafter. In the imidization process, the evaporation of the solvent and the imidization reaction occur in parallel with each other. When the temperature increasing rate is high, the amount of the evaporated solvent is small relative to the progress of the imidization reaction, and therefore the amount of the residual solvent is relatively large. When the imidization of the polyamic acid proceeds and an imide bond is formed, the solubility of the molecular chain in the solvent is reduced. Therefore, the molecular chain readily crystallizes out in a state where the amount of the residual solvent is relatively large. On the other hand, when the temperature increasing rate is low, the amount of the evaporated solvent is large relative to the progress of the imidization reaction, and the amount of the residual solvent is small, and therefore the crystallization occurs less readily. The polyimide precursor composition of the present invention comprises a basic compound, by which the reduction in the solubility of the molecular chain in the solvent may be prevented, and therefore the crystallization problem is less likely to occur under the conditions of high temperature increasing rate.

According to the present invention, the polyimide precursor composition as described above is applied to a substrate by any known method, and is heated (baked), to form a polyimide insulating coating layer. In the baking step,

the length of time for which the polyimide precursor composition is heated (in the case where the polyimide precursor composition is heated in a heating oven, the length of time for which the polyimide precursor composition is in the heating oven) may be 10 seconds to 180 seconds; the average temperature increasing rate from 100°C to 280°C may be 5°C/s or more; and the highest heating temperature may be 300°C to 500°C. The upper limit of the average temperature increasing rate from 100°C to 280°C may be preferably, but not limited to, 50°C/s or less, for example.

In addition, according to the present invention, the average temperature increasing rate from 100°C to 300°C may be 5°C/s or more (i.e. the length of time from 100°C to 300°C is within 40 seconds), and the average temperature increasing rate from 100°C to the highest heating temperature (300°C to 500°C) may be 5°C/s or more. The average temperature increasing rate up to 100°C may be, but not limited to, 5°C/s or more.

According to the present invention, there is no limit to the temperature-increasing conditions from room temperature to the highest heating temperature, with the proviso that the average temperature increasing rate from 100°C to 280°C is 5°C/s or more (i.e. the length of time from 100°C to 280°C is within 36 seconds), and the temperature may be increased at a constant temperature increasing rate, or the temperature increasing rate may be changed during the heat treatment and the temperature may be increased in a stepwise manner.

The heat treatment for imidization may be performed in an air atmosphere or in an inert gas atmosphere, for example.

The substrate may be appropriately selected depending on the intended use without any limitation. The thickness of the polyimide insulating coating layer formed may also be appropriately selected depending on the intended use without any limitation.

The polyimide insulating coating layer obtained according to the present invention is an insulating member (coating layer) having high voltage resistance, heat resistance, and heat-humidity resistance. Accordingly, the polyimide insulating coating layer may be particularly suitably used in the electrical/electronics components-related field, the automobile field, the aerospace field, and the like, and may also be used in the fields of coil for motor of HV vehicle, and ultra-compact motor.

## EXAMPLES

The present invention will be more specifically described hereinafter with reference to Examples. However, the present invention is not limited to the Examples.

The methods for measuring the properties, which were used in the following Examples, will be described below.

<Solid content>

A sample solution (the weight is referred to as "$w_1$") was heated at 120°C for 10 minutes, 250°C for 10 minutes, and then 350°C for 30 minutes in a hot air dryer, and the weight of the sample after the heat treatment (the weight is referred to as "$w_2$") was measured. The solid content [wt%] was calculated by the following formula.

$$\text{Solid content [wt\%]} = (w_2/w_1) \times 100$$

<Inherent viscosity>

A sample solution was diluted to a concentration of 0.5 g/dl based on the solid content (the solvent was water or N-methyl-2-pyrrolidone). The flowing time ($T_1$) of the diluted solution was measured at 30°C using a Cannon-Fenske viscometer No. 100. The inherent viscosity was calculated by the following formula using the flowing time (To) of water as the blank.

$$\text{Inherent viscosity} = \{\ln(T_1/T_0)\} / 0.5$$

<Solution viscosity (Rotational viscosity)>

The solution viscosity was measured at 30°C using an E type viscometer manufactured by Tokimec, Inc.

<Observation of State of Insulating coating layer (Evaluation of Coating film)>

The state was visually observed on the coating layer obtained. A coating layer in which no turbidity was observed

was evaluated as "good", and a coating layer in which the percentage of the area where turbidity was observed was more than 10 % was evaluated as "turbidity was present". The state of "turbidity was present" means that the polyimide resin is at least partially crystallized.

<Measurement of Temperature increasing rate>

In the coating layer formation step, the length of time required for the sample temperature to change from 100°C to 280°C was measured using a measurement unit NR-TH08 and an analysis software WAVE LOGGER manufactured by Keyence Corporation.

The abbreviations of the compounds used in the following Examples will be described below.

s-BPDA: 3,3',4,4'-biphenyltetracarboxylic dianhydride
ODPA: 4,4'-oxydiphthalic dianhydride
a-BPDA: 2,3,3',4'-biphenyltetracarboxylic dianhydride
ODA: 4,4'-diaminodiphenyl ether
PPD: p-phenylenediamine
1,2-DMZ: 1,2-dimethylimidazole
DABCO: 1,4-diazabicyclo[2,2,2]octane
IQ: isoquinoline
NMP: N-methyl-2-pyrrolidone

[Example 1]

In a 500 mL (internal volume) glass reaction vessel equipped with a stirrer and a nitrogen-gas charging/discharging tube was placed 396 g of NMP as a solvent. 40.05 g (0.20 mol) of ODA was added thereto, and the mixture was stirred at 50°C for 1 hour to dissolve ODA in the solvent. 58.84 g (0.20 mol) of s-BPDA was added to the resulting solution, and the mixture was stirred at 50°C for 3 hours to provide a polyimide precursor having a solid content of 18.5 wt%, a solution viscosity of 5.0 Pa·s, and an inherent viscosity of 0.68. 14.83 g (0.15 mol, 0.75 equivalents relative to the tetracarboxylic acid component) of 1,2-DMZ was added to the polyimide precursor, to provide a polyimide precursor composition.

The polyimide precursor composition was applied to a copper foil of 18 μm (3EC-VLP, manufactured by Mitsui Mining & Smelting Co., Ltd.). The resulting sample was placed on a SUS plate, which was heated to 350°C in advance, and kept on the plate for 1 minute, to produce an insulating coating layer. The length of time for which the sample temperature was increased from 100°C to 280°C therein was 25 seconds (temperature increasing rate: 7.2°C/s). Additionally, an insulating coating layer was produced in the same way, using a SUS plate which was heated to 380°C. The length of time for which the sample temperature was increased from 100°C to 280°C therein was 12 seconds (temperature increasing rate: 15°C/s). The results of the observation of the state and the evaluations of the properties performed on the polyimide precursor composition and the insulating coating layer obtained are shown in Table 1.

[Example 2]

An insulating coating layer was produced on a polyimide film in the same way as in Example 1 except that the polyimide precursor composition was applied to the polyimide film, which has a thickness of 50 μm. The results are shown in Table 1.

[Example 3]

A polyimide precursor composition was prepared in the same way as in Example 1 except that 14.83 g (0.13 mol, 0.66 equivalents relative to the tetracarboxylic acid component) of DABCO was used instead of 1,2-DMZ, and using the composition, an insulating coating layer was produced on a polyimide film in the same way as in Example 2. The results are shown in Table 1.

[Example 4]

In a 500 mL (internal volume) glass reaction vessel equipped with a stirrer and a nitrogen-gas charging/discharging tube was placed 359 g of NMP as a solvent. 20.02 g (0.10 mol) of ODA and 10.81 g (0.10 mol) of PPD were added thereto, and the mixture was stirred at 50°C for 1 hour to dissolve ODA and PPD in the solvent. 58.84 g (0.20 mol) of s-BPDA was added to the resulting solution, and the mixture was stirred at 50°C for 3 hours to provide a polyimide precursor having a solid content of 18.4 wt%, a solution viscosity of 9.5 Pa·s, and an inherent viscosity of 0.69. 13.45 g

(0.14 mol, 0.70 equivalents relative to the tetracarboxylic acid component) of 1,2-DMZ was added to the polyimide precursor, to provide a polyimide precursor composition.

Using the polyimide precursor composition, an insulating coating layer was produced on a polyimide film in the same way as in Example 2. The results of the observation of the state and the evaluations of the properties performed on the polyimide precursor and the insulating coating layer obtained are shown in Table 1.

[Example 5]

In a 500 mL (internal volume) glass reaction vessel equipped with a stirrer and a nitrogen-gas charging/discharging tube was placed 377 g of NMP as a solvent. 28.03 g (0.14 mol) of ODA and 6.49 g (0.06 mol) of PPD were added thereto, and the mixture was stirred at 50°C for 1 hour to dissolve ODA and PPD in the solvent. 41.19 g (0.14 mol) of s-BPDA and 18.61 g (0.06 mol) of ODPA were added to the resulting solution, and the mixture was stirred at 50°C for 3 hours to provide a polyimide precursor having a solid content of 18.5 wt%, a solution viscosity of 5.1 Pa·s, and an inherent viscosity of 0.68. 14.15 g (0.15 mol, 0.74 equivalents relative to the tetracarboxylic acid component) of 1,2-DMZ was added to the polyimide precursor, to provide a polyimide precursor composition.

Using the polyimide precursor composition, an insulating coating layer was produced on a polyimide film in the same way as in Example 2. The results of the observation of the state and the evaluations of the properties performed on the polyimide precursor and the insulating coating layer obtained are shown in Table 1.

[Example 6]

In a 500 mL (internal volume) glass reaction vessel equipped with a stirrer and a nitrogen-gas charging/discharging tube was placed 421 g of water as a solvent. 20.02 g (0.10 mol) of ODA and 24.03 g (0.25 mol, 2.5 equivalents relative to the tetracarboxylic acid component) of 1,2-DMZ were added thereto, and the mixture was stirred at 25°C for 1 hour to dissolve ODA and 1,2-DMZ in the solvent. 29.42 g (0.10 mol) of s-BPDA was added to the resulting solution, and the mixture was stirred at 70°C for 4 hours, to provide a polyimide precursor composition having a solid content of 9.3 wt%, a solution viscosity of 32 Pa·s, and an inherent viscosity of 0.42.

Using the polyimide precursor composition, an insulating coating layer was produced on a polyimide film in the same way as in Example 2. The results of the observation of the state and the evaluations of the properties performed on the polyimide precursor and the insulating coating layer obtained are shown in Table 1.

[Example 7]

In a 500 mL (internal volume) glass reaction vessel equipped with a stirrer and a nitrogen-gas charging/discharging tube was placed 406 g of water as a solvent. 12.97 g (0.12 mol) of PPD and 28.84 g (0.30 mol, 2.5 equivalents relative to the tetracarboxylic acid component) of 1,2-DMZ were added thereto, and the mixture was stirred at 25°C for 1 hour to dissolve PPD and 1,2-DMZ in the solvent. 35.31 g (0.12 mol) of s-BPDA was added to the resulting solution, and the mixture was stirred at 70°C for 4 hours, to provide a polyimide precursor composition having a solid content of 9.1 wt%, a solution viscosity of 63 Pa·s, and an inherent viscosity of 1.86.

Using the polyimide precursor composition, an insulating coating layer was produced on a polyimide film in the same way as in Example 2. The results of the observation of the state and the evaluations of the properties performed on the polyimide precursor and the insulating coating layer obtained are shown in Table 1.

[Example 8]

In a 500 mL (internal volume) glass reaction vessel equipped with a stirrer and a nitrogen-gas charging/discharging tube was placed 400 g of water as a solvent. 14.02 g (0.07 mol) of ODA, 3.24 g (0.03 mol) of PPD and 24.03 g (0.25 mol, 2.5 equivalents relative to the tetracarboxylic acid component) of 1,2-DMZ were added thereto, and the mixture was stirred at 25°C for 1 hour to dissolve ODA, PPD and 1,2-DMZ in the solvent. 20.60 g (0.07 mol) of s-BPDA and 9.31 g (0.03 mol) of ODPA were added to the resulting solution, and the mixture was stirred at 70°C for 4 hours, to provide a polyimide precursor composition having a solid content of 9.2 wt%, a solution viscosity of 52 Pa·s, and an inherent viscosity of 0.46.

Using the polyimide precursor composition, an insulating coating layer was produced on a polyimide film in the same way as in Example 2. The results of the observation of the state and the evaluations of the properties performed on the polyimide precursor and the insulating coating layer obtained are shown in Table 1.

[Example 9]

In a 500 mL (internal volume) glass reaction vessel equipped with a stirrer and a nitrogen-gas charging/discharging tube was placed 103 g of water as a solvent. 14.02 g (0.07 mol) of ODA, 3.24 g (0.03 mol) of PPD and 38.45 g (0.40 mol, 4.0 equivalents relative to the tetracarboxylic acid component) of 1,2-DMZ were added thereto, and the mixture was stirred at 25°C for 1 hour to dissolve ODA, PPD and 1,2-DMZ in the solvent. 20.60 g (0.07 mol) of s-BPDA and 9.31 g (0.03 mol) of ODPA were added to the resulting solution, and the mixture was stirred at 70°C for 4 hours, to provide a polyimide precursor composition having a solid content of 23.1 wt%, a solution viscosity of 3.5 Pa·s, and an inherent viscosity of 0.25.

The polyimide precursor composition was applied to a polyimide film having a thickness of 50 μm. The resulting sample was placed on a SUS plate, which was heated to 350°C in advance, and kept on the plate for 1 minute, to produce an insulating coating layer. The length of time for which the sample temperature was increased from 100°C to 280°C therein was 25 seconds (temperature increasing rate: 7.2°C/s). Additionally, an insulating coating layer was produced in the same way, using a SUS plate which was heated to 380°C. The length of time for which the sample temperature was increased from 100°C to 280°C therein was 12 seconds (temperature increasing rate: 15°C/s). The results of the observation of the state and the evaluations of the properties performed on the polyimide precursor composition and the insulating coating layer obtained are shown in Table 2.

[Example 10]

In a 500 mL (internal volume) glass reaction vessel equipped with a stirrer and a nitrogen-gas charging/discharging tube were placed 98 g of water and 5.0 g of NMP as a solvent. 14.02 g (0.07 mol) of ODA, 3.24 g (0.03 mol) of PPD and 38.45 g (0.40 mol, 4.0 equivalents relative to the tetracarboxylic acid component) of 1,2-DMZ were added thereto, and the mixture was stirred at 25°C for 1 hour to dissolve ODA, PPD and 1,2-DMZ in the solvent. 20.60 g (0.07 mol) of s-BPDA and 9.31 g (0.03 mol) of ODPA were added to the resulting solution, and the mixture was stirred at 70°C for 4 hours, to provide a polyimide precursor composition having a solid content of 23.2 wt%, a solution viscosity of 3.1 Pa·s, and an inherent viscosity of 0.27.

Using the polyimide precursor composition, an insulating coating layer was produced on a polyimide film in the same way as in Example 9. The results of the observation of the state and the evaluations of the properties performed on the polyimide precursor and the insulating coating layer obtained are shown in Table 2.

[Example 11]

In a 500 mL (internal volume) glass reaction vessel equipped with a stirrer and a nitrogen-gas charging/discharging tube was placed 98 g of water as a solvent. 10.01 g (0.05 mol) of ODA, 5.41 g (0.05 mol) of PPD and 38.45 g (0.40 mol, 4.0 equivalents relative to the tetracarboxylic acid component) of 1,2-DMZ were added thereto, and the mixture was stirred at 25°C for 1 hour to dissolve ODA, PPD and 1,2-DMZ in the solvent. 20.60 g (0.07 mol) of s-BPDA and 9.31 g (0.03 mol) of ODPA were added to the resulting solution, and the mixture was stirred at 70°C for 4 hours, to provide a polyimide precursor composition having a solid content of 23.1 wt%, a solution viscosity of 2.1 Pa·s, and an inherent viscosity of 0.26.

Using the polyimide precursor composition, an insulating coating layer was produced on a polyimide film in the same way as in Example 9. The results of the observation of the state and the evaluations of the properties performed on the polyimide precursor and the insulating coating layer obtained are shown in Table 2.

[Example 12]

In a 500 mL (internal volume) glass reaction vessel equipped with a stirrer and a nitrogen-gas charging/discharging tube were placed 93 g of water and 5 g of NMP as a solvent. 10.01 g (0.05 mol) of ODA, 5.41 g (0.05 mol) of PPD and 38.45 g (0.40 mol, 4.0 equivalents relative to the tetracarboxylic acid component) of 1,2-DMZ were added thereto, and the mixture was stirred at 25°C for 1 hour to dissolve ODA, PPD and 1,2-DMZ in the solvent. 20.60 g (0.07 mol) of s-BPDA and 9.31 g (0.03 mol) of ODPA were added to the resulting solution, and the mixture was stirred at 70°C for 4 hours, to provide a polyimide precursor composition having a solid content of 23.1 wt%, a solution viscosity of 2.0 Pa·s, and an inherent viscosity of 0.25.

Using the polyimide precursor composition, an insulating coating layer was produced on a polyimide film in the same way as in Example 9. The results of the observation of the state and the evaluations of the properties performed on the polyimide precursor and the insulating coating layer obtained are shown in Table 2.

[Example 13]

In a 500 mL (internal volume) glass reaction vessel equipped with a stirrer and a nitrogen-gas charging/discharging tube was placed 102 g of water as a solvent. 14.02 g (0.07 mol) of ODA, 3.24 g (0.03 mol) of PPD and 38.45 g (0.40 mol, 4.0 equivalents relative to the tetracarboxylic acid component) of 1,2-DMZ were added thereto, and the mixture was stirred at 25°C for 1 hour to dissolve ODA, PPD and 1,2-DMZ in the solvent. 20.60 g (0.07 mol) of s-BPDA and 8.83 g (0.03 mol) of a-BPDA were added to the resulting solution, and the mixture was stirred at 70°C for 4 hours, to provide a polyimide precursor composition having a solid content of 23.0 wt%, a solution viscosity of 4.3 Pa·s, and an inherent viscosity of 0.22.

Using the polyimide precursor composition, an insulating coating layer was produced on a polyimide film in the same way as in Example 9. The results of the observation of the state and the evaluations of the properties performed on the polyimide precursor and the insulating coating layer obtained are shown in Table 2.

[Example 14]

In a 500 mL (internal volume) glass reaction vessel equipped with a stirrer and a nitrogen-gas charging/discharging tube were placed 97 g of water and 5 g of NMP as a solvent. 14.02 g (0.07 mol) of ODA, 3.24 g (0.03 mol) of PPD and 38.45 g (0.40 mol, 4.0 equivalents relative to the tetracarboxylic acid component) of 1,2-DMZ were added thereto, and the mixture was stirred at 25°C for 1 hour to dissolve ODA, PPD and 1,2-DMZ in the solvent. 20.60 g (0.07 mol) of s-BPDA and 8.83 g (0.03 mol) of a-BPDA were added to the resulting solution, and the mixture was stirred at 70°C for 4 hours, to provide a polyimide precursor composition having a solid content of 23.1 wt%, a solution viscosity of 3.1 Pa·s, and an inherent viscosity of 0.24.

Using the polyimide precursor composition, an insulating coating layer was produced on a polyimide film in the same way as in Example 9. The results of the observation of the state and the evaluations of the properties performed on the polyimide precursor and the insulating coating layer obtained are shown in Table 2.

[Example 15]

In a 500 mL (internal volume) glass reaction vessel equipped with a stirrer and a nitrogen-gas charging/discharging tube was placed 102 g of water as a solvent. 14.02 g (0.07 mol) of ODA, 3.24 g (0.03 mol) of PPD and 38.45 g (0.40 mol, 4.0 equivalents relative to the tetracarboxylic acid component) of 1,2-DMZ were added thereto, and the mixture was stirred at 25°C for 1 hour to dissolve ODA, PPD and 1,2-DMZ in the solvent. 29.42 g (0.10 mol) of s-BPDA was added to the resulting solution, and the mixture was stirred at 70°C for 4 hours, to provide a polyimide precursor composition having a solid content of 22.9 wt%, a solution viscosity of 21 Pa·s, and an inherent viscosity of 0.37.

Using the polyimide precursor composition, an insulating coating layer was produced on a polyimide film in the same way as in Example 9. The results of the observation of the state and the evaluations of the properties performed on the polyimide precursor and the insulating coating layer obtained are shown in Table 2.

[Example 16]

In a 500 mL (internal volume) glass reaction vessel equipped with a stirrer and a nitrogen-gas charging/discharging tube were placed 97 g of water and 5 g of NMP as a solvent. 14.02 g (0.07 mol) of ODA, 3.24 g (0.03 mol) of PPD and 38.45 g (0.40 mol, 4.0 equivalents relative to the tetracarboxylic acid component) of 1,2-DMZ were added thereto, and the mixture was stirred at 25°C for 1 hour to dissolve ODA, PPD and 1,2-DMZ in the solvent. 29.42 g (0.10 mol) of s-BPDA was added to the resulting solution, and the mixture was stirred at 70°C for 4 hours, to provide a polyimide precursor composition having a solid content of 23.1 wt%, a solution viscosity of 15 Pa·s, and an inherent viscosity of 0.36.

Using the polyimide precursor composition, an insulating coating layer was produced on a polyimide film in the same way as in Example 9. The results of the observation of the state and the evaluations of the properties performed on the polyimide precursor and the insulating coating layer obtained are shown in Table 2.

[Comparative Example 1]

A polyimide precursor composition was prepared in the same way as in Example 1 except that 1,2-DMZ was not used, and using the composition, an insulating coating layer was produced on a polyimide film in the same way as in Example 2. The results are shown in Table 3.

[Comparative Example 2]

A polyimide precursor composition was prepared in the same way as in Example 5 except that 1,2-DMZ was not used, and using the composition, an insulating coating layer was produced on a polyimide film in the same way as in Example 2. The results are shown in Table 3.

[Comparative Example 3]

A polyimide precursor composition was prepared in the same way as in Example 1 except that 14.83 g (0.11 mol, 0.57 equivalents relative to the tetracarboxylic acid component) of IQ was used instead of 1,2-DMZ, and using the composition, an insulating coating layer was produced on a polyimide film in the same way as in Example 2. The results are shown in Table 3.

[Reference Example 1]

In a 500 mL (internal volume) glass reaction vessel equipped with a stirrer and a nitrogen-gas charging/discharging tube was placed 396 g of NMP as a solvent. 40.05 g (0.20 mol) of ODA was added thereto, and the mixture was stirred at 50°C for 1 hour to dissolve ODA in the solvent. 58.84 g (0.20 mol) of s-BPDA was added to the resulting solution, and the mixture was stirred at 50°C for 3 hours to provide a polyimide precursor having a solid content of 18.5 wt%, a solution viscosity of 5.0 Pa·s, and an inherent viscosity of 0.68.

The polyimide precursor composition was applied to a polyimide film having a thickness of 50 μm, which was fixed on a glass plate. The resulting sample was placed in a baking furnace, which was heated to 400°C in advance, and kept in the furnace for 1 minute, to produce a coating film. The length of time for which the sample temperature was increased from 100°C to 280°C therein was 37 seconds (temperature increasing rate: 4.9°C/s). The results of the observation of the state and the evaluations of the properties performed on the polyimide precursor and the insulating coating layer obtained are shown in Table 3.

Table 1

<table>
<tr><td colspan="2"></td><td colspan="2">Example 1</td><td colspan="2">Example 2</td><td colspan="2">Example 3</td><td colspan="2">Example 4</td><td colspan="2">Example 5</td><td colspan="2">Example 6</td><td colspan="2">Example 7</td><td colspan="2">Example 8</td></tr>
<tr><td colspan="2">Composition of Polyamic acid</td><td colspan="2"></td><td colspan="2"></td><td colspan="2"></td><td colspan="2"></td><td colspan="2"></td><td colspan="2"></td><td colspan="2"></td><td colspan="2"></td></tr>
<tr><td rowspan="3">Acid component</td><td>s-BPDA (mol%)</td><td colspan="2">100</td><td colspan="2">100</td><td colspan="2">100</td><td colspan="2">100</td><td colspan="2">70</td><td colspan="2">100</td><td colspan="2">100</td><td colspan="2">70</td></tr>
<tr><td>ODPA (mol%)</td><td colspan="2"></td><td colspan="2"></td><td colspan="2"></td><td colspan="2"></td><td colspan="2">30</td><td colspan="2"></td><td colspan="2"></td><td colspan="2">30</td></tr>
<tr><td>a-BPDA (mol%)</td><td colspan="2"></td><td colspan="2"></td><td colspan="2"></td><td colspan="2"></td><td colspan="2"></td><td colspan="2"></td><td colspan="2"></td><td colspan="2"></td></tr>
<tr><td rowspan="2">Diamine component</td><td>ODA (mol%)</td><td colspan="2">100</td><td colspan="2">100</td><td colspan="2">100</td><td colspan="2">50</td><td colspan="2">70</td><td colspan="2">100</td><td colspan="2"></td><td colspan="2">70</td></tr>
<tr><td>PPD (mol%)</td><td colspan="2"></td><td colspan="2"></td><td colspan="2"></td><td colspan="2">50</td><td colspan="2">30</td><td colspan="2"></td><td colspan="2">100</td><td colspan="2">30</td></tr>
<tr><td colspan="2">Solvent</td><td colspan="2">NMP</td><td colspan="2">NMP</td><td colspan="2">NMP</td><td colspan="2">NMP</td><td colspan="2">NMP</td><td colspan="2">water</td><td colspan="2">water</td><td colspan="2">water</td></tr>
<tr><td rowspan="3">Basic compound</td><td>1,2-DMZ (equivalents)</td><td colspan="2">0.75</td><td colspan="2">0.75</td><td colspan="2"></td><td colspan="2">0.7</td><td colspan="2">0.74</td><td colspan="2">2.5</td><td colspan="2">2.5</td><td colspan="2">2.5</td></tr>
<tr><td>DABCO (equivalents)</td><td colspan="2"></td><td colspan="2"></td><td colspan="2">0.66</td><td colspan="2"></td><td colspan="2"></td><td colspan="2"></td><td colspan="2"></td><td colspan="2"></td></tr>
<tr><td>IQ (equivalents)</td><td colspan="2"></td><td colspan="2"></td><td colspan="2"></td><td colspan="2"></td><td colspan="2"></td><td colspan="2"></td><td colspan="2"></td><td colspan="2"></td></tr>
<tr><td rowspan="3">Polyimide precursor composition</td><td>Inherent viscosity</td><td colspan="2">0.68</td><td colspan="2">0.68</td><td colspan="2">0.68</td><td colspan="2">0.69</td><td colspan="2">0.68</td><td colspan="2">0.42</td><td colspan="2">1.86</td><td colspan="2">0.46</td></tr>
<tr><td>Solid content (wt%)</td><td colspan="2">18.5</td><td colspan="2">18.5</td><td colspan="2">18.5</td><td colspan="2">18.4</td><td colspan="2">18.5</td><td colspan="2">9.3</td><td colspan="2">9.1</td><td colspan="2">9.2</td></tr>
<tr><td>Rotational viscosity (Pa·s)</td><td colspan="2">5.0</td><td colspan="2">5.0</td><td colspan="2">5.0</td><td colspan="2">9.5</td><td colspan="2">5.1</td><td colspan="2">32</td><td colspan="2">63</td><td colspan="2">52</td></tr>
<tr><td colspan="2">Substrate</td><td colspan="2">Copper foil</td><td colspan="2">PI</td><td colspan="2">PI</td><td colspan="2">PI</td><td colspan="2">PI</td><td colspan="2">PI</td><td colspan="2">PI</td><td colspan="2">PI</td></tr>
<tr><td colspan="2">100-280°C average temperature increasing rate (°C/sec)</td><td>7.2</td><td>15</td><td>7.2</td><td>15</td><td>7.2</td><td>15</td><td>7.2</td><td>15</td><td>7.2</td><td>15</td><td>7.2</td><td>15</td><td>7.2</td><td>15</td><td>7.2</td><td>15</td></tr>
<tr><td colspan="2">Evaluation of Coating film</td><td>good</td><td>good</td><td>good</td><td>good</td><td>good</td><td>good</td><td>good</td><td>good</td><td>good</td><td>good</td><td>good</td><td>good</td><td>good</td><td>good</td><td>good</td><td>good</td></tr>
</table>

Table 2

| | | Example 9 | | Example 10 | | Example 11 | | Example 12 | | Example 13 | | Example 14 | | Example 15 | | Example 16 | |
|---|---|---|---|---|---|---|---|---|---|---|---|---|---|---|---|---|---|
| Composition of Polyamic acid | | | | | | | | | | | | | | | | | |
| Acid component | s-BPDA (mol%) | 70 | | 70 | | 70 | | 70 | | 70 | | 70 | | 100 | | 100 | |
| | ODPA (mol%) | 30 | | 30 | | 30 | | 30 | | | | | | | | | |
| | a-BPDA (mol%) | | | | | | | | | 30 | | 30 | | | | | |
| Diamine component | ODA (mol%) | 70 | | 70 | | 50 | | 50 | | 70 | | 70 | | 70 | | 70 | |
| | PPD (mol%) | 30 | | 30 | | 50 | | 50 | | 30 | | 30 | | 30 | | 30 | |
| Solvent | | water | | water + NMP | | water | | water + NMP | | water | | water + NMP | | water | | water + NMP | |
| Basic compound | 1,2-DMZ (equivalents) | 4.0 | | 4.0 | | 4.0 | | 4.0 | | 4.0 | | 4.0 | | 4.0 | | 4.0 | |
| | DABCO (equivalents) | | | | | | | | | | | | | | | | |
| | IQ (equivalents) | | | | | | | | | | | | | | | | |
| Polyimide precursor composition | Inherent viscosity | 0.25 | | 0.27 | | 0.26 | | 0.25 | | 0.22 | | 0.24 | | 0.37 | | 0.36 | |
| | Solid content (wt%) | 23.1 | | 23.2 | | 23.1 | | 23.1 | | 23.0 | | 23.1 | | 22.9 | | 23.1 | |
| | Rotational viscosity (Pa·s) | 3.5 | | 3.1 | | 2.1 | | 2.0 | | 4.3 | | 3.1 | | 21 | | 15 | |
| Substrate | | PI | | PI | | PI | | PI | | PI | | PI | | PI | | PI | |
| 100-280°C average temperature increasing rate (°C/sec) | | 7.2 | 15 | 7.2 | 15 | 7.2 | 15 | 7.2 | 15 | 7.2 | 15 | 7.2 | 15 | 7.2 | 15 | 7.2 | 15 |
| Evaluation of Coating film | | good | good | good | good | good | good | good | good | good | good | good | good | good | good | good | good |

Table 3

| | | Comparative Example 1 | Comparative Example 2 | Comparative Example 3 | Reference Example 1 |
|---|---|---|---|---|---|
| Composition of Polyamic acid | | | | | |
| Acid component | s-BPDA (mol%) | 100 | 70 | 100 | 100 |
| | ODPA (mol%) | | 30 | | |
| | a-BPDA (mol%) | | | | |
| Diamine component | ODA (mol%) | 100 | 70 | 100 | 100 |
| | PPD (mol%) | | 30 | | |
| Solvent | | NMP | NMP | NMP | NMP |
| Basic compound | 1,2-DMZ (equivalents) | | | | |
| | DABCO (equivalents) | | | | |
| | IQ (equivalents) | | | 0.57 | |
| Polyimide precursor composition | Inherent viscosity | 0.68 | 0.68 | 0.68 | 0.68 |
| | Solid content (wt%) | 18.5 | 18.5 | 18.5 | 18.5 |
| | Rotational viscosity (Pa·s) | 5.0 | 5.1 | 5.0 | 5.0 |
| Substrate | | PI | PI | PI | PI |
| 100-280°C average temperature increasing rate (°C/sec) | | 7.2 | 7.2 | 7.2 | 4.9 |
| Evaluation of Coating film | | turbidity was present | turbidity was present | turbidity was present | good |

**Claims**

**1.** A method for producing a polyimide insulating coating layer, the method comprising a step of:

applying a polyimide precursor composition to a substrate and baking the composition on the substrate, wherein the polyimide precursor composition comprises
a polyamic acid consisting of a repeating unit represented by the following chemical formula (1):

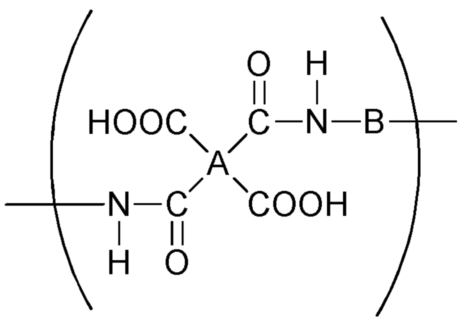

(1)

in the chemical formula (1),
A is a tetravalent organic group and 50 mol% to 100 mol% of A is a tetravalent group represented by the following

chemical formula (2):

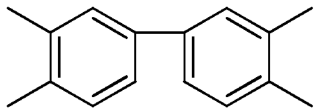

(2)

;

and

B is a divalent organic group, and

a basic compound selected from the group consisting of imidazoles and amine compounds, and

wherein in the baking step,

the length of time for which the polyimide precursor composition is heated is 10 seconds to 180 seconds;

the average temperature increasing rate from 100°C to 280°C is 5°C/s or more; and

the highest heating temperature is 300°C to 500°C.

2. The method for producing an insulating coating layer according to claim 1, wherein the polyimide precursor composition comprises an imidazole having two or more alkyl groups as substituents as the basic compound.

3. The method for producing an insulating coating layer according to claim 2, wherein the imidazole is an imidazole selected from the group consisting of 1,2-dimethylimidazole, 2-ethyl-4-methylimidazole, 4-ethyl-2-methylimidazole, and 1-methyl-4-ethylimidazole.

4. The method for producing an insulating coating layer according to any one of claims 1 to 3, wherein the polyimide precursor composition comprises an aliphatic amine or a cyclic amine as the basic compound.

5. The method for producing an insulating coating layer according to claim 4, wherein the amine compound is a compound selected from the group consisting of trimethylamine, diethylamine, dimethylethylamine, triethylamine, N-propylethylamine, N-butylethylamine, N,N-dimethylcyclohexylamine, and 1,4-diazabicyclo[2,2,2]octane.

**INTERNATIONAL SEARCH REPORT**

International application No.
PCT/JP2014/056504

A. CLASSIFICATION OF SUBJECT MATTER
*B05D7/24*(2006.01)i, *B05D3/02*(2006.01)i, *C08G73/10*(2006.01)n, *C08K5/17*(2006.01)n, *C08K5/3445*(2006.01)n, *C08L79/08*(2006.01)n, *C09D5/25*(2006.01)n, *C09D179/08*(2006.01)n

According to International Patent Classification (IPC) or to both national classification and IPC

B. FIELDS SEARCHED

Minimum documentation searched (classification system followed by classification symbols)
B05D1/00-7/26, C08G73/00-73/26, C08K3/00-13/08, C08L1/00-101/16, C09D1/00-201/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2012-102237 A (Dainippon Printing Co., Ltd.), 31 May 2012 (31.05.2012), claims; examples (Family: none) | 1-5 |
| A | JP 8-27418 A (Hitachi, Ltd. et al.), 30 January 1996 (30.01.1996), claims; examples (Family: none) | 1-5 |
| A | JP 2003-80651 A (Toray Industries, Inc.), 19 March 2003 (19.03.2003), claims; examples (Family: none) | 1-5 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03 June, 2014 (03.06.14) | 17 June, 2014 (17.06.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S61273806 A
- JP H0827418 A
- WO 2012008543 A